# EUROPEAN PATENT SPECIFICATION

(11) **EP 0 630 832 B1**
(45) Date of publication and mention of the grant of the patent: **25.06.1997**
(21) Application number: 94107836.2
(22) Date of filing: 20.05.1994
(51) Int. Cl.: B65G 15/40

(54) **A flexible belt for tube conveyors**
Ein flexibles Band für Rohrförderer
Une bande flexible pour convoyeur tubulaire

(30) Priority: 23.06.1993 IT TO930454
(43) Date of publication of application: 28.12.1994
(73) Proprietor: SAIAG INDUSTRIA S.p.A., I-10073 Cirie' (Torino) (IT)
(72) Inventor: Cacioppo, Antonio, I-10076 Nole Canavese (Torino) (IT)
(74) Representative: Quinterno, Giuseppe

(56) References cited:
- EP-A- 0 213 219
- EP-A- 0 336 385
- DE-A- 3 542 990
- FR-A- 2 637 272
- GB-A- 2 003 577
- GB-A- 2 046 172

## Description

The present invention relates to a flexible belt of elastomeric material or the like as defined in the preamble of Claim 1.

A flexible belt of this kind is disclosed in FR-A-2 637 272. The side portions of this prior art belt include respective edge portions having an important, quite thick cross-section and, adjacent thereto, respective intermediate portions which are, comparatively, very thin. Said enlarged edge portions are provided with respective mating formations which can be brought into engagement with one another to retain the belt in a closed, tube-like configuration. Each edge portion incorporates a single reinforcing cable. Said cables are twisted in opposite senses.

Flexible belts for tube conveyors are also described, for example, in EP-A-0 336 385.

The object of the present invention is to provide a flexible belt of the type indicated above, the structure of which is such as to facilitate its bending during its transition from the substantially flat configuration to the closed, tube-like configuration.

This object is achieved, according to the invention, by means of a flexible belt having the features defined in Claim 1.

In a belt according to the invention the twisting moments transmitted by the stranded reinforcing cables incorporated in the side portions of the belt are such as to induce said portions to bend towards each other spontaneously, thus facilitating the transition of the belt from a substantially flat configuration to the closed, tube-like configuration, the transition normally being induced as a result of the interaction of the belt with deflector rollers disposed on the path of the belt.

Further characteristics and advantages of the invention will become clear from the description which follows purely by way of non-limiting example, with reference to the appended drawings, in which:
Figure 1 is a cross-section of a belt according to the invention, in a flat configuration;
Figure 2 is a sectioned view of the belt of Figure 1 showing the spontaneous tendency of the belt to bend;
Figure 3 is a sectioned view of a belt according to the invention in the closed, tube-like configuration; and
Figure 4 is a cross-section of an embodiment of a stranded reinforcing cable incorporated in a belt according to the invention, on an enlarged scale.

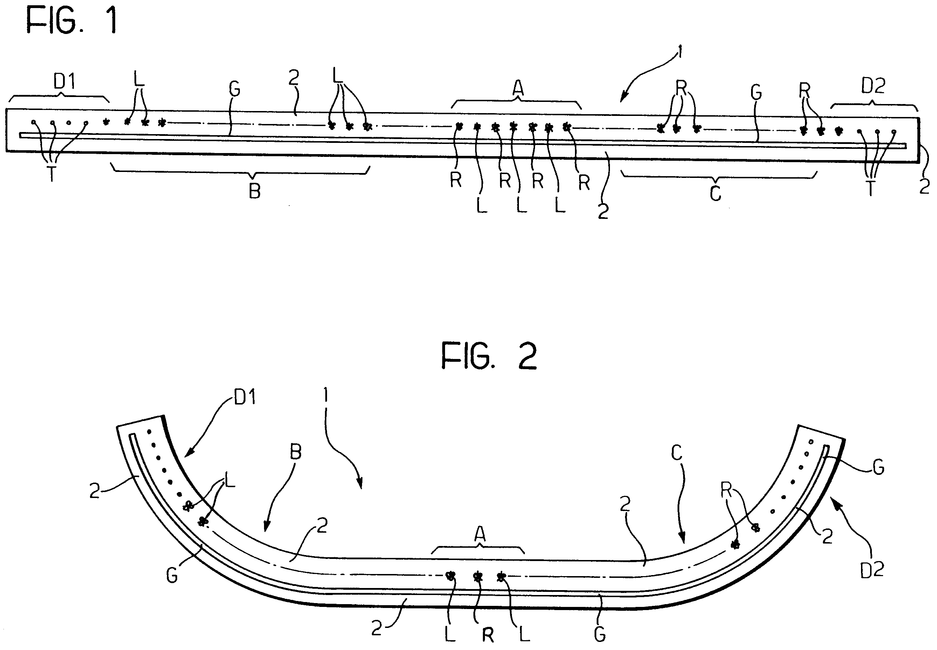

With reference to Figures 1 to 3, a flexible belt according to the invention is generally indicated 1.

The belt 1 is made of an elastomeric material 2, or the like, in which longitudinal reinforcing cables, for example, of steel, are incorporated.

In the embodiment shown by way of example in Figures 1 to 3, reinforcing cables are incorporated in a substantially central transverse portion A of the belt, alternate reinforcing cables, indicated R and L, having strands twisted in one sense and in the opposite sense, respectively. For example, the cables R are twisted clockwise and the cables L are twisted anticlockwise.

Beside the portion A, the belt 1 has two transverse side portions B and C in each of which the reinforcing cables are twisted predominantly in a predetermined sense. In particular, in the portion B, most of the reinforcing cables are twisted anticlockwise. Figure 1 shows a specific embodiment in which all the reinforcing cables of the portion B are twisted anticlockwise. These cables are indicated L like the cables of the central portion A which are twisted anticlockwise.

The reinforcing cables of the portion C are twisted predominantly in the opposite sense, that is, clockwise. Figure 1 shows a specific embodiment in which all the reinforcing cables of the portion C are twisted clockwise and are indicated R, like the cables of the central portion A which are wound in the same sense.

In the embodiment shown by way of example, longitudinal reinforcing wires or strands T, which have smaller diameters than the stranded cables L, R and are preferably closer together transversely, are incorporated in the longitudinal edges D1 and D2.

A textile reinforcing structure G is incorporated in the belt 1, beneath the layer which comprises the stranded cables L, R and the wires or strands T, to prevent the belt 1 from splitting in the event of a longitudinal cut or crack forming between the adjacent stranded cables, wires or strands.

With reference to the embodiment shown in the drawings, in the central region A, the twisting moments applied by the stranded cables R and L, respectively, to the elastomeric material in which they are incorporated substantially cancel each other out. The central portion A of the belt 1 therefore tends naturally to lie flat.

The effects of the twisting moments exerted by the stranded cables in a (predominantly) anticlockwise sense in the portion B and in a (predominantly) clockwise sense in the portion C, on the other hand, are such as to induce these portions to bend spontaneously in the manner shown in Figure 2.

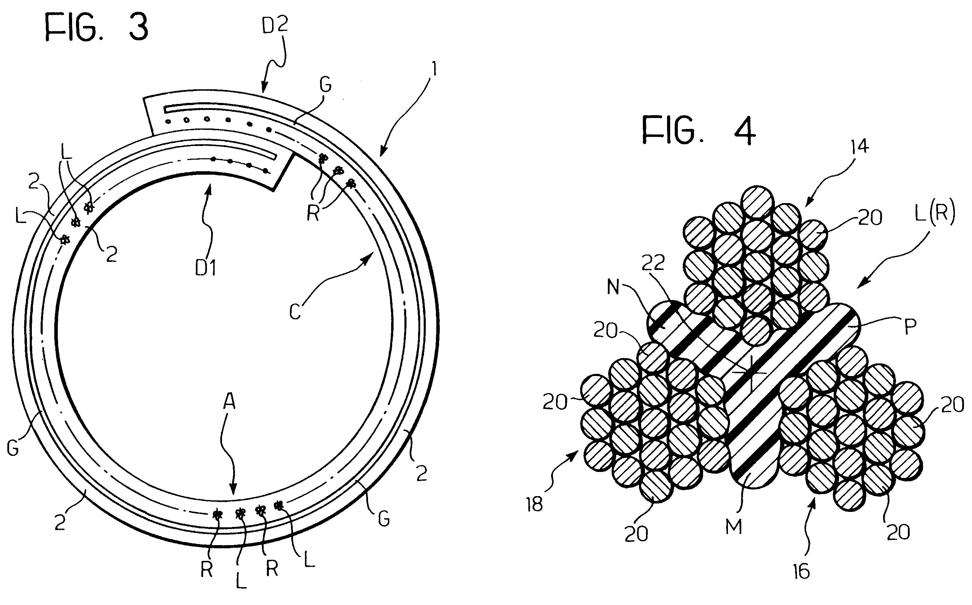

This spontaneous tendency of the portions B and C to bend is particularly advantageous when the belt 1 has to be transformed from its flat configuration (Figure 1) to a closed, tube-like configuration (Figure 3), in which its edges D1 and D2 are superposed.

Figure 4 shows an embodiment of one of the stranded reinforcing cables L or R. In this embodiment, the cable L (R) is composed of three bare strands 14, 16, 18 which are twisted together helically and each of which is composed of a plurality of bare steel wires 20 which are twisted together helically in each strand. The strands 14 to 18 are preferably identical.

The strands are twisted together on a continuous profile 22 of polymeric material, preferably of a yielding type. This profile has a star-like cross-section with three arms P, M, N which are preferably identical and disposed at 120° spacings. During the twisting, the profile 22 is progressively twisted about its own axis in accordance with the helical pitch of the strands. Each arm or branch P, M, N is inserted between two adjacent strands and is gripped between them.

The radial lengths of the arms P, M, N are preferably such that, in any case, they prevent direct physical contact between the strands 14, 16 and 18.

Naturally, the principle of the invention remaining the same, the forms of embodiment and details of construction may be varied widely with respect to those described and illustrated purely by way of non-limiting example, without thereby departing from the scope of the present invention.

Thus, for example, the belt may not include an intermediate strip (such as that indicated A in Figure 1) with reinforcing cables twisted in alternate senses, and each of the portions B and C may even extend over an entire half of the belt.

Moreover, the stranded reinforcing cables may be formed in a different manner from the embodiment described with reference to Figure 4.

## Claims

1. A flexible belt (1) of elastomeric material or the like for conveyors in which the belt (1) is bent transversely and, as a result of the superposition of its longitudinal edges (D1, D2), is closed like a tube; the belt (1) having, in a transverse cross-section, a central portion (A) and two opposite side portions (D1, B; D2, C) in each of which a respective longitudinal stranded reinforcing cable (L; R) is incorporated, said cables (L; R) being twisted in opposite senses; said side portions (D1, B; D2, C) including each a lateral edge portion (D1; D2) and an intermediate portion (B; C) joining with said central portion (A);
characterised in that in one of said intermediate portions (B) the belt (1) comprises a set of reinforcing cables (L) which are twisted predominantly in one sense whereas in the opposite intermediate portion (C) the belt (1) comprises a set of reinforcing cables (R) which are twisted predominantly in the opposite sense; the arrangement being such that the twisting moments exerted by said reinforcing cables (L; R) are such as to induce said intermediate portions (B; C) to bend one towards the other.

2. A belt according to Claim 1, characterized in that in said central portion (A) alternate reinforcing cables (R, L) are twisted in one sense and in the opposite sense, respectively.

3. A belt according to Claim 1 or Claim 2, characterized in that a textile reinforcing structure (G) is incorporated beneath the layer of reinforcing cables (L, R).

4. A belt according to any one of the preceding claims, characterized in that reinforcing wires or strands (T) with smaller cross-sections are incorporated close together in the longitudinal edge portions (D1, D2).

5. A belt according to any one of the preceding claims, characterized in that each reinforcing cable (L, R) comprises at least three strands (14, 16, 18), which are preferably bare and are twisted around a continuous profile (22) with a star-like cross-section having at least three arms or branches (M, N, P) each of which extends far enough between two consecutive strands to prevent direct physical contact between the strands (14, 16, 18).

6. A belt according to Claim 5, characterized in that the strands (14, 16, 18) are formed by steel wires (20).

7. A belt according to Claim 5 or Claim 6, characterized in that the continuous profile (22) of each reinforcing cable (L, R) is of polymeric material.

## Patentansprüche

1. Flexibles Band (1) aus einem elastomeren Werkstoff oder ähnlichem für Fördereinrichtungen, bei denen das Band (1) in Querrichtung gebogen und durch die Überlagerung seiner Längskanten (D1, D2) rohrartig geschlossen wird; wobei das Band (1) im Querschnitt einen Mittelbereich (A) sowie zwei gegenüberliegende Seitenbereiche (D1, B; D2, C) besitzt, wobei in jedem Bereich ein in Längsrichtung verlaufendes, verseiltes Verstärkungskabel (L; R) untergebracht ist, wobei die Kabel (L; R) entgegengesetzt verdrillt sind; wobei jeder Seitenbereich (D1, B; D2, C) einen Seitenkantenbereich (D1; D2) sowie' einen Zwischenbereich (B; C) aufweist, der eine Verbindung mit dem Mittelbereich (A) herstellt;
dadurch gekennzeichnet, daß das Band (1) in einem Zwischenbereich (B) eine Reihe von Verstärkungskabeln (L) enthält, die vorwiegend in einer Richtung verdrillt sind, während das Band (1) im gegenüberliegenden Zwischenbereich (C) eine Reihe von Verstärkungskabeln (R) enthält, die vorwiegend im entgegengesetzten Sinn verdrillt sind; wobei der Aufbau so erfolgt, daß die von den Verstärkungskabeln (L; R) aufgebrachten Drillmomente so groß sind, daß sie die Zwischenbereiche (B; C) dazu bringen, sich zueinander zu biegen.

2. Band gemäß Anspruch 1, dadurch gekennzeichnet, daß einander abwechselnde Verstärkungskabel (L; R) im Mittelbereich (A) in einer Richtung bzw. in der entgegengesetzten Richtung verdrillt sind.

3. Band gemäß Anspruch 1 oder 2, dadurch gekennzeichnet, daß unterhalb der Lage der Verstärkungskabel (L, R) ein textiler Verstärkungsaufbau (G) untergebracht ist.

4. Band gemäß irgendeinem der bisherigen Ansprüche, dadurch gekennzeichnet, daß Verstärkungsdrähte oder Verstärkungslitzen (T) mit einem kleineren Querschnitt in den in Längsrichtung verlaufenden Kantenbereichen (D1, D2) nahe nebeneinander untergebracht sind.

5. Band gemäß irgendeinem der bisherigen Ansprüche, dadurch gekennzeichnet, daß jedes Verstärkungskabel (L, R) zumindest drei Litzen (14, 16, 18) enthält, die vorzugsweise blank und um ein endloses Profilstück (22) verdrillt sind, das einen sternförmigen Querschnitt aufweist, der zumindest drei Arme oder Zweige (M, N, P) besitzt, von denen sich jeder zwischen zwei aufeinanderfolgenden Litzen weit genug erstreckt, um eine direkte körperliche Berührung zwischen den Litzen (14, 16, 18) zu verhindern.

6. Band gemäß Anspruch 5, dadurch gekennzeichnet, daß die Litzen (14, 16, 18) von Stahldrähten (20) gebildet werden.

7. Band gemäß Anspruch 5 oder 6, dadurch gekennzeichnet, daß das endlose Profilstück (22) eines jeden Verstärkungskabels (L, R) aus einem polymeren Werkstoff besteht.

## Revendications

1. Courroie flexible (1) d'un matériau élastomère ou analogue, destinée à des transporteurs dans lesquels la courroie (1) est courbée transversalement et, à la suite de la superposition de ses bords longitudinaux (D1, D2) , se ferme comme un tube, la courroie (1) ayant, en coupe transversale, une partie centrale (A) et deux parties latérales opposées (D1, B ; D2, C) dans chacune desquelles est incorporé un câble longitudinal respectif retordu d'armature (L ; R), les câbles (L ; R) étant tordus en sens opposés, les parties latérales (D1, B ; D2, C) comprenant chacune une partie latérale de bord (D1 ; D2) et une partie intermédiaire (B ; C) se raccordant à la partie centrale (A),
caractérisée en ce que, dans l'une des parties intermédiaires (B), la courroie (1) comporte un ensemble de câbles d'armature (L) qui sont retordus essentiellement dans un sens alors que, dans la partie intermédiaire opposée (C), la courroie (1) possède un ensemble de câbles d'armature (R) qui sont retordus essentiellement dans le sens opposé, la disposition étant telle que les moments de torsion exercés par les câbles d'armature (L ; R) sont tels qu'ils induisent une courbure des parties intermédiaires (B ; C) l'une vers l'autre.

2. Courroie selon la revendication 1, caractérisée en ce que, dans la partie centrale (A), les câbles d'armature qui alternent (R, L) sont retordus dans un sens et dans l'autre sens respectivement.

3. Courroie selon la revendication 1 ou 2, caractérisée en ce qu'une structure textile d'armature (G) est incorporée sous la couche des câbles d'armature (L, R) .

4. Courroie selon l'une quelconque des revendications précédentes, caractérisée en ce que des brins ou fils (T) d'armature de plus faible section sont incorporés à proximité dans les parties longitudinale de bord (D1, D2).

5. Courroie selon l'une quelconque des revendications précédentes, caractérisée en ce que chaque câble d'armature (L, R) comporte au moins trois brins (14, 16, 18) qui sont de préférence nus et sont retordus autour d'un profilé continu (22) ayant une section en étoile comprenant au moins trois bras ou branches (M, N, P) qui s'étendent chacun suffisamment loin entre deux brins consécutifs pour empêcher un contact physique direct entre les brins (14, 16, 18).

6. Courroie selon la revendication 5, caractérisée en ce que les brins (14, 16, 18) sont formés par des fils d'acier (20).

7. Courroie selon la revendication 5 ou 6, caractérisée en ce que le profilé continu (22) de chaque câble d'armature (L, R) est formé d'un matériau polymère.
